# EUROPÄISCHE PATENTSCHRIFT

(11) **EP 1 254 986 B1**
(45) Veröffentlichungstag und Bekanntmachung des Hinweises auf die Patenterteilung: **03.05.2006**
(21) Anmeldenummer: 02004578.7
(22) Anmeldetag: 28.02.2002
(51) Int. Cl.: D21B 1/32, D21B 1/02

(54) **Verfaren zur Herstellung einer Faserstoffsuspension aus papierhaltigem Material**
Process for making pulp from papercontaining material
Procédé pour la fabrication d' une pâte à partir de matériaux contenant du papier

(30) Priorität: 02.05.2001 DE 10121324
(43) Veröffentlichungstag der Anmeldung: 06.11.2002
(73) Patentinhaber: Voith Paper Patent GmbH, 89522 Heidenheim (DE)
(72) Erfinder: Dockal-Bauer, Jürgen, 88273 Fronreute (DE); Pfalzer, Lothar, Dr., 88214 Ravensburg (DE); Selder, Harald, 88281 Schlier (DE)

(56) Entgegenhaltungen:
- EP-A- 0 802 275
- EP-A- 0 898 012
- WO-A-00/71810
- WO-A-94/00632
- DE-A- 2 433 324
- US-A- 6 120 648

## Beschreibung

Die Erfindung bezieht sich auf ein Verfahren gemäß dem Oberbegriff des Anspruchs 1.

Aus der DE-A-197 53 202 ist ein System bekannt, welches der Aufbereitung von papierhaltigen Verpackungsabfällen dient. Dabei sollen sortenreine Kunststoffe gewonnen werden. Bei diesem Verfahren fällt auch eine Altpapiersorte an, die aus lufttrockenen Papierstücken oder -fetzen besteht und schon einen gewissen Reinheitsgrad aufweist; sie ist aber nicht frei von Störstoffen, insbesondere von anhaftenden Kunststofffolien, z.B. von Getränkekartons. Dieses Altpapier eignet sich zur üblichen Auflösung z.B. im Stofflöser.

In der DE-A-24 33 324 wird ein Verfahren zur Gewinnung von Altpapier beschrieben. Dabei wird das noch nicht aufgelöste Altpapier verschiedenen Trennschritten unterzogen, um die Fremdstoffe abzuscheiden. Anschließend wird das so gesäuberte Altpapier in Ballen gepresst.

Aus der DE-A-34 39 098 ist ein Verfahren bekannt, bei dem vor der Auflösung im Stofflöser mehrere Zerkleinerungs- und Reinigungsschritte an dem noch nicht suspendierten Altpapier durchgeführt werden. Dieses Verfahren ist aufwendig und nicht optimal zur Erzeugung heller Papiersorten.

In den meisten Fällen wird allerdings das Altpapier auch heute noch in dem in der Papierfabrik angelieferten Zustand in einen Stofflöser eingetragen. Dabei dient dieser Stofflöser zur Vermischung mit Wasser und zur Auflösung der Papierbahnen. Erforderlichenfalls kann vor dem Stofflöser bereits eine Station zur Entfernung der Ballendrähte oder Ballenbänder vorgesehen sein. In der Regel werden alle Bestandteile des Altpapierballens, eventuell ohne die besagten Bänder oder Drähte, in den Stofflöser eingeworfen und dort mehr oder weniger stark mechanisch bearbeitet. Eine unerwünschte Folge des bekannten Verfahrens kann neben dem hohen Energieverbrauch im Stofflöser eine Zerkleinerung von faserfremden Begleitstoffen sein, die so weit geht, dass ihre spätere Entfernung schwierig wird. Die große Menge der so in die Suspension gelangten Störstoffe erfordert einen hohen Sortier- und Reinigungsaufwand.

Der Erfindung liegt die Aufgabe zu Grunde, ein Verfahren zu schaffen, mit dem es möglich ist, das Altpapier auf besonders wirtschaftliche Weise zu einer sauberen Papierfasersuspension aufzuarbeiten, welche einen erhöhten Anteil von hellen Papierfasern enthält. Dabei soll ein Teil der sonst üblichen Reinigungsvorgänge für die Papierfasersuspension eingespart werden können.

Diese Aufgabe wird durch die im Kennzeichen des Anspruchs 1 genannten Merkmale gelöst.

Bei diesem Verfahren wird also das als Rohstoff eingesetzte, angelieferte Altpapier zu Beginn der Aufbereitung durch Zerkleinern der Ballen und dann der Papierbahnen in stückige Form (Papierfetzen) gebracht. Durch geeignete Trennverfahren wird eine helle relativ saubere Altpapierfraktion gebildet. Dabei ist z.B. an Windsichter oder ballistische Trennapparate zu denken. Als Windsichter können Zickzack-Windsichter oder Luftzyklone verwendet werden, wobei Luftzyklone besonders trennscharf sind. Gerade Trockentrennverfahren lassen sich so einstellen, dass die helle Fraktion auch gleichzeitig die deutlich störstoffärmere Fraktion ist. Die Charakterisierung "Trocken" ist dabei so zu verstehen, dass das Papier wie angeliefert, also lufttrocken, oder höchstens mit wenig Sprühwasser benetzt, verarbeitet wird. Die Bindekräfte im Papier sind dabei noch nicht wesentlich herabgesetzt.

Mit Vorteil kann die helle Fraktion auch in einer Knetvorrichtung oder in einer Auflösetrommel aufgelöst werden. Die Auflösewirkung kann durch Erwärmung des Altpapiers noch verstärkt werden. Der so gewonnene Faserstoff ist oft so sauber, dass er problemlos in eine Feinsortierung gefahren werden kann, die z.B. mit engen Schlitzen versehen ist.

Die Erfindung und ihre Vorteile werden erläutert an Hand von Zeichnungen. Dabei zeigen:
- Fig. 1: ein vereinfachtes Anlagenschema, geeignet zur Durchführung des erfindungsgemäßen Verfahrens;
- Fig. 2: eine Variante mit Kneter statt Stofflöser zur Auflösung;
- Fig. 3: einen Eiwellenzerfaserer mit Sieb zur Auflösung und Störstoffentfernung;
- Fig. 4: eine Variante mit Auflösetrommel;
- Fig. 5: eine andere Ansicht der Trommel gemäß Fig. 4.

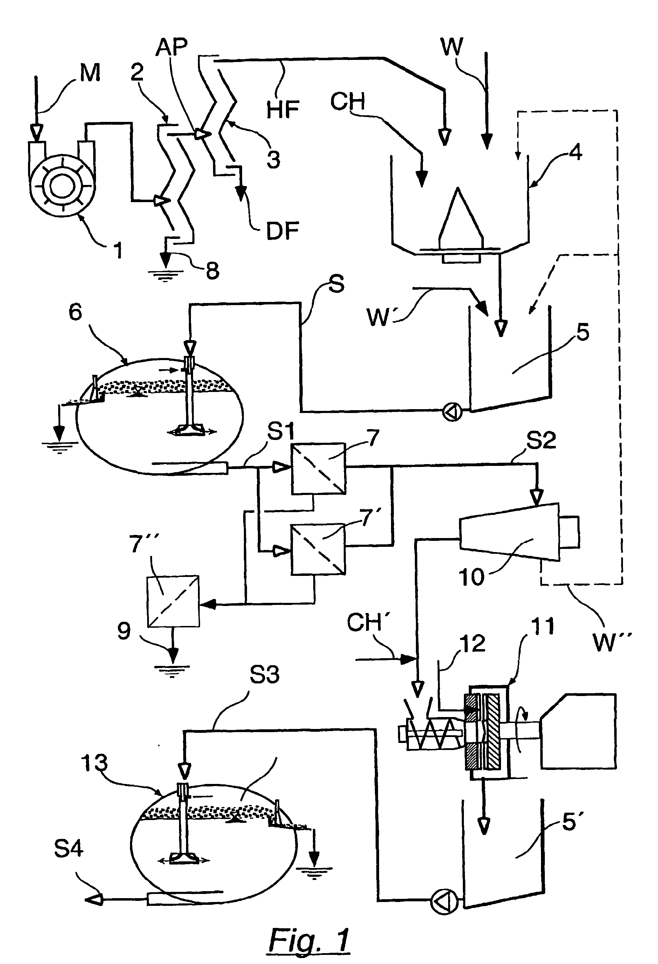

Die Fig. 1 ist ein vereinfachtes Anlagenschema, welches die Durchführung des erfindungsgemäßen Verfahrens erläutert. Das papierhaltige Material M wird durch die Zerkleinerung 1 auf eine maximale Teilchengröße von 200 mm, vorzugsweise 40 bis 60 mm, gebracht. Hierfür kann z.B. ein Shredder verwendet werden, der in an sich bekannter Weise das angelieferte Material M auf den gewünschten Feinheitsgrad bringt. Wird das Material M in Form von gepressten Ballen angeliefert, so ist in der Regel vor dem Shredder eine hier nicht gezeigte Auflockerungsapparatur von Nöten. Der Austrag, z.B. des Shredders, besteht dann also aus Papierfetzen und einer Mischung von faserfremden vorzerkleinerten Störstoffen. Der Zerkleinerung 1 schließt sich die Trockensortierung 2 an, deren Rückstand 8, der je nach Zusammensetzung des Materials M mengenmäßig sehr umfangreich sein und z.B. Plastikstücke oder Schwerteile enthalten kann. Die andere Fraktion dieser Trockensortierung 2 ist der Altpapierstoff AP, welcher erfindungsgemäß in die Trockenfraktionierung 3 geführt wird. Diese wird so eingestellt, dass eine helle Fraktion HF durch Anreicherung der hellen Papieranteile entsteht, sowie eine dunkle Fraktion DF mit deutlich höherem Anteil von dunklen Papierfasern.

Die so gebildete helle Fraktion HF, die zudem schon von einem großen Teil der Störstoffe befreit ist und praktisch keine groben Verunreinigungen mehr enthält, wird der Auflösung 4 zugeführt. Bei dieser ist in dem hier gezeigten Beispiel ein Stofflöser im Einsatz, bei dem durch Zugabe von Wasser W ein Feststoffgehalt z.B. zwischen 4 und 15 % eingestellt wird. Solche Stofflöser sind an sich bekannt. Die Auflösung 4 kann - wie später noch gezeigt wird - auch in anderen Apparaturen erfolgen. Nach erfolgter Auflösung wird eventuell unter Zugabe von weiterem Verdünnungswasser W' in einer Verdünnungsbütte 5 eine Faserstoffsuspension S abgezogen, welche infolge der wirksamen Trockensortierung und-Fraktionierung ohne weitere Sortierschritte oder Hydrozyklone deinkt werden kann. Lediglich bei erhöhter Plastikfracht könnte vorher eine - hier nicht gezeigte - Lochsortierung zweckmäßig sein.

In einer Deinkinganlage 6, die wie hier mit Flotationszellen arbeitet, aber stattdessen auch einen Waschvorgang enthalten könnte, wird die Suspension von Druckfarben und sonstigen hydrophoben Verunreinigungen getrennt. Die deinkte Faserstoffsuspension S1 kommt dann in eine mit mehreren Drucksortierem 7, 7', 7" ausgestattete Nasssiebung. Das heißt, der Überlauf der beiden exemplarisch gezeichneten Drucksortierer 7, 7' wird zusammengefasst und einem weiteren Drucksortierer 7" zugeführt, der den Rejekt 9 bildet. Durch die an dieser Stelle vorgenommene Aussortierung besteht die Möglichkeit, einen großen Teil der im Altpapier vorhandenen Verunreinigungen, insbesondere Kunststofffolienstücke, im Rejekt 9 auszuscheiden. Das ist darauf zurückzuführen, dass Aufschlussgrad des Altpapiers und Zustand der Störstoffe für eine solche Aussortierung besonders günstig sind.

Wenn das hier vorliegende Altpapier zur Herstellung von grafischen Papieren vorgesehen ist, empfiehlt sich eine weitere Verarbeitung in Form einer Dispergierung 11. Die hierzu erforderliche hohe Konsistenz wird durch eine vorgeschaltete Eindickung 10 erreicht, welche einen Hochkonsistenzstoff, z.B. zwischen 20 und 25 % Stoffdichte erzeugt. Das dabei abgepresste Wasser W" kann z.B. zum Auflösen oder Verdünnen zurückgeführt werden (gestrichelte Linie). Die Deinking-Chemikalien 1' werden dem Hochkonsistenzstoff zugeführt, bevor es in die Dispergierung 11 gelangt. Zur Erhitzung des Stoffes wird Dampf 12 zugegeben. Der dispergierte Stoff wird in einer weiteren Verdünnungsbütte 5' erneut verdünnt und als Suspension S3 einer weiteren Deinkinganlage 13 zugeführt, in der insbesondere die durch Dispergierung abgelösten Restverunreinigungen durch Flotation ausgeschieden werden können. Schließlich entsteht ein Gutstoff S4, der zur Weiterverarbeitung gelangt.

Unter Umständen sollten kleine Schwerteile in einer sich anschließenden - hier nicht gezeigten - Hydrozyklonbehandlung entfernt werden, wozu sich hochwirksame Cleaner besonders gut eignen. In vielen Fällen kann aber gerade das überflüssig sein, weil die trockene Vorbehandlung des Altpapiers schon zu einer ausreichenden Sauberkeit geführt hat. Hier liegt ein großes Einsparungspotential im Vergleich zu bisherigen Verfahren.

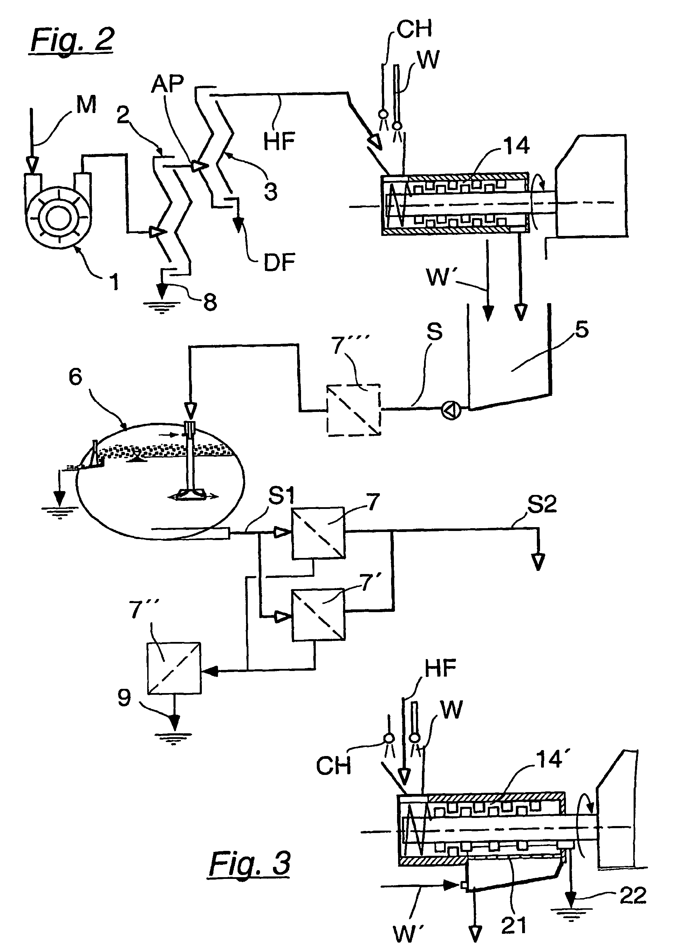

In der Fig. 2 schematisch dargestellten Anlage wird die helle Fraktion HF, ohne dass sie vorher aufgelöst, also in Suspension gebracht wurde, in einen Einwellenzerfaserer 14 eingeführt und dabei mit Hilfe von Spritzrohren mit der erforderlichen Menge Wasser W besprüht. Das Wasser kann auch direkt in den Kneter eingeleitet werden. Von Vorteil ist es, wenn die z.B. zur Deinkingflotation benötigten Chemikalien CH hier gleich mit zugegeben werden. Da aus der hohen Feststoffkonzentration eine höhere Wirsamkeit der Chemikalien resuliert, können diese geringer dosiert werden. Einwellenzerfaserer 14 und Zweiwellenzerfaserer sind gut geeignete Apparate, um die Auflösung auszuführen, aber nicht die einzigen. In diesen Apparaten können die Scherkräfte in der gewünschten Größe gleichmäßig auf alle Anteile des Stoffes übertragen werden. Das dient der Energieökonomie und ist wichtig bei empfindlichen Störstoffen (Folien, Stickies) und bei der Ablösung der Druckfarbenpartikel von den Fasern. Diese letztgenannte Vorbereitung auf später durchzuführende Deinkingverfahren ist bei den hier betrachteten Altpapier-Rohstoffen von besonderer Bedeutung. So kann die Wirkung im Ein- oder Zweiwellenzerfaserer zur Ablösung der Farben von den Fasern ausreichen, so dass eine nachfolgende Deinkinkanlage 6 bereits zu vollständigen Druckfarbenentfernung führt. Die in Fig. 1 gezeigte Dispergierung 11 und weitere Deinkinganlage 13 können entfallen oder wenigstens verkleinert werden, was ein bedeutender Vorteil dieser Verfahrensvariante ist. Zur Entlastung der Flotationszellen von Kunststofffolien wird hier eine Lochsortierung 7''' (z.B. mit 1-3 mm Lochdurchmesser) vorgeschaltet. Da sie auch entfallen kann, ist sie gestrichelt gezeichnet.

Gem dem Beispiel Fig.3 kann der Kneter, hier ein Enwellenzerfaserer 14', auch mit einem Sieb 21 versehen sein, welches den aufgelösten Papierstoff passieren läßt und restliche Störstoffe, z.B. Kunststofffolienstücke abweist und als Rejekt 22 ausscheidet. Diese Darstellung ist lediglich eine Funktionsskizze.

Nach der mechanischen Bearbeitung im Einwellenzerfaserer 14 fällt das Altpapiers in die Verdünnungsbütte 5. Hinzu kommt das Wasser W' zur Erzeugung einer Suspension mit der Konsistenz, die für die nachfolgende Flotation zweckmäßig ist. Danach wird, wie schon früher beschrieben, eine Nasssiebung durchgeführt, die auch wieder mehrstufig ist. Der Durchlauf der Drucksortierer 7 und 7' fließt als saubere Suspension S2 ab.

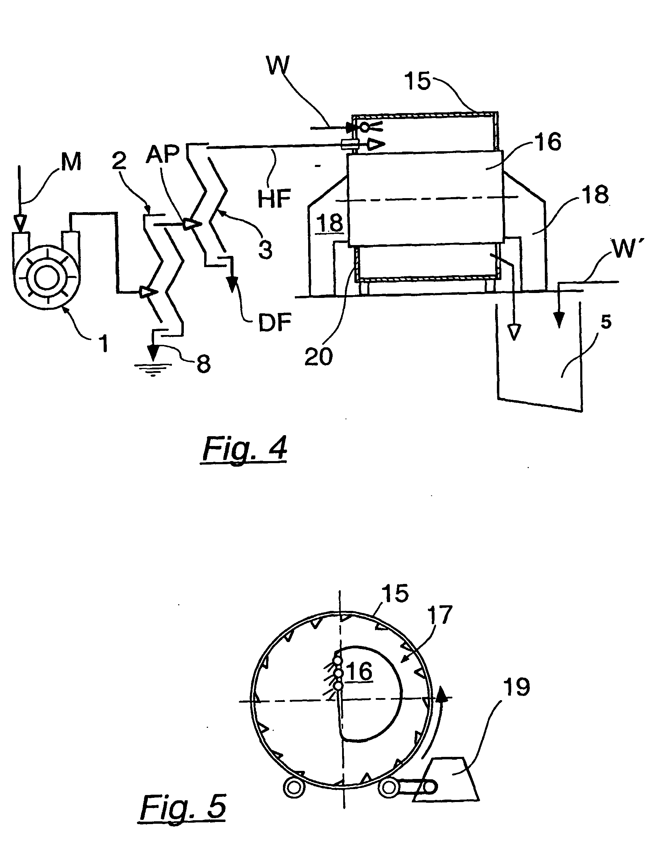

Die Fig. 4 zeigt zur Durchführung der Auflösung eine andere Vorrichtung, nämlich eine knetend wirkende rotierende Auflösetrommel 15, in der durch das Zusammenwirken von einem feststehenden Verdränger 16 der eingetragene und befeuchtete Altpapierstoff die für die Durchführung des Verfahrens erforderliche Bearbeitung erfährt. Mit Vorteil kann die helle Fraktion HF direkt in das Innere der Auflösetrommel 15 eingeblasen werden. Der Verdränger 16 wird von außen über zwei Ständer 18 gehalten. Während der Zylindermantel der Auflösetrommel 15 rotiert, kann die Axialwand 20 feststehen, z.B. mit dem Ständer 18 verbunden sein. Es bildet sich zwischen Verdränger 16 und Auflösetrommel 15 eine Knetzone 17 mit intensiver Reibung und Scherung aus. Auch an anderen Stellen des Trommelinneren kann Knetarbeit übertragen werden. Eine solche oder ähnliche Vorrichtung ist z.B. aus der deutschen Patentanmeldung P 197 36 143 bekannt.

Die Fig. 5 zeigt die erwähnte Auflösetrommel 15 in Ansicht von der Stirnseite. Auch der Antriebsmotor 19' ist angedeutet. Auch die Darstellungen der Fig. 4 und 5 sind lediglich schematisch und sollen keine konstruktiven Details wiedergeben.

## Patentansprüche

1. Verfahren zur Herstellung einer Faserstoffsuspension aus papierhaltigem Material (M) mit folgenden Schritten:
1.1 Zerkleinerung (1) des Materials (M) auf maximale Teilchengröße von 200 mm;
1.2 Trockensortierung (2) des Materials (M) zur Bildung eines Altpapierstoffes (AP) durch Entfernung des überwiegenden Teils seiner papierfremden Bestandteile;
1.3 Zugabe von Wasser (W) zur Einstellung des Feststoffgehaltes auf einen Wert zwischen 4 % und 35 %;
1.4 Auflösung (4) mit einer spezifischen Arbeit von mindestens 5 kWh/to;
1.5 Einstellung auf einen Feststoffgehalt unter 6%;
**dadurch gekennzeichnet,**
**dass** der Altpapierstoff (AP) vor der Zugabe des zur Auflösung benötigten Wassers (W) einer Trockenfraktionierung (3) unterzogen wird zur Anreicherung der
hellen Papieranteile in einer hellen Fraktion (HF) unter Abscheiden der dunklen Papieranteile in einer dunklen Fraktion (DF), wobei die helle Fraktion (HF) maximal 3% weiche und maximal 0,5 % harte Störstoffe enthält.

2. Verfahren nach Anspruch 1,
**dadurch gekennzeichnet,**
**dass** die Auflösung (4) in einem Stofflöser erfolgt.

3. Verfahren nach Anspruch 1,
**dadurch gekennzeichnet,**
**dass** die Auflösung (4) in einem Einwellenzerfaserer (14,14') erfolgt, bei einem Feststoffgehalt zwischen 15 % und 35 %.

4. Verfahren nach Anspruch 3,
**dadurch gekennzeichnet,**
**dass** der Einwellenzerfaserer (14, 14') mit Knetwerkzeugen betrieben wird, die
in einem Abstand von mindestens 10 mm mit einer Geschwindigkeit von höchstens 15 m/sec relativ zueinander bewegt werden.

5. Verfahren nach Anspruch 3 oder 4,
**dadurch gekennzeichnet,**
**dass** im Einwellenzerfaserer (14') mit Hilfe mindestens eines Siebes Störstoffe ausgeschieden werden.

6. Verfahren nach Anspruch 1,
**dadurch gekennzeichnet,**
**dass** die Auflösung (4), bei einem Feststoffgehalt zwischen 8 % und 30 %, in einer sich drehenden, mit einem feststehenden Verdrängerkörper (16)
versehenen Trommel (15) durchgeführt wird, wobei zwischen Verdrängerkörper (16) und Trommel (15) eine Knetzone (17) gebildet wird.

7. Verfahren nach einem der voranstehenden Ansprüche,
**dadurch gekennzeichnet,**
**dass** das Altpapier (AP) vor der Zerkleinerung (1), Trockensortierung (2) oder Trockenfraktionierung (3) durch Aufsprühen von Wasser auf einen Feststoffgehalt gebracht wird, der zwischen 75 % und 95 % liegt.

8. Verfahren nach einem der voranstehenden Ansprüche,
**dadurch gekennzeichnet,**
**dass** vor der Auflösung (4) mit Hilfe eines Magnetabscheiders Eisenteile entfernt werden.

9. Verfahren nach einem der voranstehenden Ansprüche,
**dadurch gekennzeichnet,**
**dass** vor der Zerkleinerung (1) des Materials (M) Ballen-Bindedrähte entfernt werden.

10. Verfahren nach einem der voranstehenden Ansprüche,
**dadurch gekennzeichnet,**
**dass** aus dem aufgelösten Altpapier in mindestens einer Deinkinganlage (6, 13) feine Verunreinigungen, insbesondere Druckfarben, entfernt werden.

11. Verfahren nach Anspruch 4 und 10, Anspruch 5 und 10, oder Anspruch 6 und 10,
**dadurch gekennzeichnet,**
**dass** nur eine Deinkinganlage (6) verwendet wird.

12. Verfahren nach Anspruch 10 oder 11,
**dadurch gekennzeichnet,**
**dass** zwischen der Auflösung (4) und der ersten oder einzigen Deinkinganlage (6) keine Sortierer verwendet werden.

13. Verfahren nach einem der Ansprüche 1 bis 11,
**dadurch gekennzeichnet,**
**dass** nach der Auflösung (4) der hellen Fraktion (HF) aus dieser die faserfremden Störstoffe, insbesondere Kunststofffolien mit Hilfe einer Nasssiebung entfernt werden.

14. Verfahren nach Anspruch 13,
**dadurch gekennzeichnet,**
**dass** die Nasssiebung bei einer Konsistenz zwischen 2 und 5 % durchgeführt wird.

15. Verfahren nach Anspruch 13 oder 14,
**dadurch gekennzeichnet,**
**dass** die Nasssiebung durch Siebe mit runden Sieböffnungen von 1 bis 3 mm Durchmesser durchgeführt wird.

16. Verfahren nach Anspruch 13, 14 oder 15,
**dadurch gekennzeichnet,**
**dass** die Nasssiebung so betrieben wird, **dass** mindestens 80 % der Kunststofffolien ausgeschieden werden, die bei der Auflösung (4) noch enthalten sind.

17. Verfahren nach einem der Ansprüche 10 bis 16,
**dadurch gekennzeichnet,**
**dass** zwischen der Auflösung (4) und der Deinkinganlage (6, 13) keine Hydrozyklone verwendet werden.

18. Verfahren nach einem der voranstehenden Ansprüche,
**dadurch gekennzeichnet,**
**dass** zur Feinsortierung eine Nasssiebung in mindestens einem Drucksortierer (7, 7', 7") durchgeführt wird, wobei Schlitzsiebe verwendet werden,deren Schlitzweite höchstens 0,5 mm beträgt.

19. Verfahren nach Anspruch 18,
**dadurch gekennzeichnet,**
**dass** bei der Feinsortierung eine Konsistenz von 0,8 bis 2 %, vorzugsweise 1-1,6 % eingestellt wird.

20. Verfahren nach einem der voranstehenden Ansprüche,
**dadurch gekennzeichnet,**
**dass** das Verfahren kontinuierlich durchgeführt wird.

21. Verfahren nach einem der voranstehenden Ansprüche,
**dadurch gekennzeichnet,**
**dass** die Trockenfraktionierung (3) in einem Windsichter durchgeführt wird, bei dem die helle Fraktion (HF) als Leichtfraktion gewonnen wird.

22. Verfahren nach Anspruch 21,
**dadurch gekennzeichnet,**
**dass** die helle Fraktion (HF) nach der Trockenfraktionierung (3) pneumatisch in die zur Auflösung (4) dienende Apparatur gefördert wird.

23. Verfahren nach einem der voranstehenden Ansprüche,
**dadurch gekennzeichnet,**
**dass** die Trockensortierung (2) in einem Windsichter durchgeführt wird, bei dem der Altpapierstoff (AP) als Leichtfraktion gewonnen wird.

24. Verfahren nach Anspruch 21 und 23 oder nach Anspruch 22 und 23,
**dadurch gekennzeichnet,**
**dass** beide Windsichter direkt hintereinander geschaltet sind, wobei die Leichtfraktion des ersten Windsichters als Zulaufstrom für den zweiten Windsichter genommen wird.

25. Verfahren nach Anspruch 23,
**dadurch gekennzeichnet,**
**dass** für die Trockensortierung (2) zusätzlich optische und/oder ballistische Trennverfahren angewendet werden.

26. Verfahren nach einem der voranstehenden Ansprüche,
**dadurch gekennzeichnet,**
**dass** keine hochwirksamen Hydrozyklone mit einer Zentrifugalbeschleunigung über 200 mal Erdbeschleunigung zur Entfernung kleiner Schwerteile verwendet werden.

## Claims

1. Process for making a pulp suspension from material (M) containing paper, comprising the following steps:
1.1 disintegrating (1) the material (M) to a maximum particle size of 200 mm;
1.2 dry sorting (2) the material (M) to form a waste paper stock (AP) by removing the majority of its non-paper constituents;
1.3 adding water (W) to set the solids content to a value between 4% and 35%;
1.4 repulping (4) with a specific energy of at least 5 kWh/tonne;
1.5 setting the solids content to below 6%;
**characterised in**
**that** the waste paper stock (AP) is subjected to dry fractionation (3) prior to adding the water (W) required for repulping in order to enrich the light-coloured paper portions in a light-coloured fraction (HF) while separating the dark paper portions in a dark fraction (DF), wherein the light-coloured fraction (HF) contains a maximum of 3% soft and a maximum of 0.5% hard interferents.

2. Process according to Claim 1,
**characterised in**
**that** the repulping (4) takes place in a pulper.

3. Process according to Claim 1,
**characterised in**
**that** the repulping (4) takes place in a single-shaft defibrator (14, 14') with a solids content between 15% and 35%.

4. Process according to Claim 3,
**characterised in**
**that** the single-shaft defibrator (14, 14') is operated with kneading tools which are moved relative to one another at a spacing of at least 10 mm at a speed of at most 15 m/sec.

5. Process according to Claim 3 or 4,
**characterized in**
**that** interferents are separated in the single-shaft defibrator (14') by means of at least one screen.

6. Process according to Claim 1,
**characterised in**
**that** the repulping (4), with a solids content between 8% and 30%, is carried out in a rotating drum (15) provided with a stationary displacement body (16), wherein a kneading zone (17) is formed between the displacement body (16) and the drum (15).

7. Process according to any one of the preceding Claims,
**characterised in**
**that** the waste paper (AP) is brought to a solids content which lies between 75% and 95% by spraying on water prior to the disintegration (1), dry sorting (2) or dry fractionation (3).

8. Process according to any one of the preceding Claims,
**Characterised in**
**that** iron parts are removed by means of a magnetic separator prior to the repulping (4).

9. Process according to any one of the preceding Claims,
**characterised in**
**that** bale binding wires are removed prior to the disintegration (1) of the material (M).

10. Process according to any one of the preceding Claims,
**characterised in**
**that** fine impurities, in particular printing inks, are removed from the repulped waste paper in at least one de-inking plant (6, 13).

11. Process according to Claims 4 and 10, Claims 5 and 10 or Claims 6 and 10,
**characterised in**
**that** just one de-inking plant (6) is used.

12. Process according to Claim 10 or 11,
**characterised in**
**that** no sorters are used between the repulping (4) and the first or single de-inking plant (6).

13. Process according to any one of Claims 1 to 11,
**characterised in**
**that**, following the repulping (4) of the light-coloured fraction (HF), the non-fibre interferents, in particular plastics films, are removed from this fraction by means of wet screening.

14. Process according to Claim 13,
**characterised in**
**that** the wet screening is carried out with a consistency between 2 and 5%.

15. Process according to Claim 13 or 14,
**characterised in**
**that** the wet screening is carried out through screens with round screen apertures of a diameter of 1 to 3 mm.

16. Process according to Claim 13, 14 or 15,
**characterised in**
**that** the wet screening is operated such that at least 80% of the plastics films still contained when repulping (4) are separated.

17. Process according to any one of Claims 10 to 16,
**characterised in**
**that** no hydrocyclones are used between the repulping (4) and the de-inking plant (6, 13).

18. Process according to any one of the preceding Claims,
**characterised in**
**that** wet screening in at least one pressure sorter (7, 7', 7") is carried out for fine sorting, wherein slotted screens whose slot width is at most 0.5 mm are used.

19. Process according to Claim 18,
**characterised in**
**that** a consistency of 0.8 to 2%, preferably 1 - 1.6%, is set when carrying out the fine sorting.

20. Process according to any one of the preceding Claims,
**characterised in**
**that** the process is carried out continuously.

21. Process according to any one of the preceding Claims,
**characterised in**
**that** the dry fractionation (3) is carried out in an air classifier, in which the light-coloured fraction (HF) is obtained as a lightweight fraction.

22. Process according to Claim 21,
**characterised in**
**that** the light-coloured fraction (HF) is pneumatically conveyed into the apparatus serving for the repulping (4) following the dry fractionation (3).

23. Process according to any one of the preceding claims,
**characterised in**
**that** the dry sorting (2) is carried out in an air classifier, in which the waste paper stock (AP) is obtained as a lightweight fraction.

24. Process according to Claims 21 and 23 or according to Claims 22 and 23,
**characterised in**
**that** the two air classifiers are disposed directly one behind the other, wherein the lightweight fraction of the first air classifier is taken as the feed flow for the second air classifier.

25. Process according to Claim 23,
**characterised in**
**that** optical and/or ballistic separation processes are additionally employed for the fine sorting (2).

26. Process according to any one of the preceding Claims,
**characterised in that** no highly efficient hydrocyclones with a centrifugal acceleration above 200 times gravitational acceleration are used for removing small heavies.

## Revendications

1. Procédé destiné à la fabrication d'une suspension de matière fibreuse à partir de matière (M) contenant du papier, comportant les étapes suivantes :
1.1 déchiquetage (1) de la matière (M) à une grosseur maximale de particules de 200 mm ;
1.2 tri par voie sèche (2) de la matière (M), pour la formation d'une matière de vieux papiers (AP) par l'élimination de la majeure partie de ses impuretés
1,3 ajout d'eau (W) pour le réglage de la teneur en matières solides à une valeur comprise entre 4 % et 35 % ;
1.4 dissolution (4) avec une puissance spécifique d'au moins 5 kwh/to ;
1.5 réglage à une teneur en matières solides inférieure à 6 % ;
**caractérisé en ce que,**
avant l'ajout de l'eau (w) nécessaire à la dissolution, la matière de vieux papiers (AP) est soumise à un fractionnement par voie sèche (3) pour l'enrichissement des proportions claires de papier en une fraction claire (HF) par élimination des proportions sombres de papier en une fraction sombre (DF), la fraction claire (HF) contenant au maximum 3 % d'impuretés molles et au maximum 0, 5 % d'impuretés dures.

2. Procédé selon la revendication 1,
**caractérisé en ce que**
la dissolution (4) est effectuée dans un pulper de matière.

3. Procédé selon la revendication 1,
**caractérisé en ce que**
la dissolution (4) est effectuée dans un broyeur à un cylindre (14, 14'), à une teneur en matières solides comprise entre 15 % et 35 %.

4. Procédé selon la revendication 3,
**caractérisé en ce que**
le broyeur à un cylindre (14, 14') fonctionne avec des outils de malaxage qui sont déplacés les uns par rapport aux autres à un écartement d'au moins 10 mm, à une vitesse maximale de 15 m/s.

5. Procédé selon la revendication 3 ou 4,
**caractérisé en ce que**
des impuretés sont éliminées dans le broyeur à un cylindre (14') à l'aide d'au moins un crible.

6. Procédé selon la revendication 1,
**caractérisé en ce que**
la dissolution (4) est effectuée à une teneur en matières solides comprise entre 8 % et 30%, dans un tambour rotatif (15) muni d'un corps de refoulement (16) fixe, une zone de malaxage (17) étant formée entre le corps de refoulement (16) et le tambour (15).

7. Procédé selon l'une des revendications précédentes,
**caractérise en ce que**,
avant le déchiquetage (1), le tri par voie sèche (2) ou le fractionnement par voie sèche (3), les vieux papiers (AP) sont amenés par pulvérisation d'eau à une teneur en matières solides qui est comprise entre 75 % et 95 %.

8. Procédé selon l'une des revendications précédentes,
**caractérisé en ce que,**
avant la dissolution (4), des particules de fer sont éliminées à l'aide d'un séparateur magnétique.

9. Procédé selon l'une des revendications précédentes;
**caractérisé en ce que**
des fils de fer de cerclage de balles de la matière (M) sont retirés avant le déchiquetage (1).

10. Procédé selon l'une des revendications précédentes,
**caractérisé en ce que**
des impuretés fines, notamment des encres d'impression, sont éliminées des vieux papiers dissous dans au moins une unité de désencrage (6, 13).

11. Procédé, selon les revendications 4 et 10, les revendications 5 et 10 ou les revendications 6 et 10,
**caractérisé en ce que**
il n'est utilisé qu'une seule unité de désencrage (6).

12. Procédé selon la revendication 10 ou 11,
**caractérisé en ce que**,
entre la dissolution (4) et la première ou la seule unité de désencrage (6), il n'est pas utilisé de trieuse.

13. Procédé selon l'une des revendications 1 à 11,
**caractérisé en ce que,**
après la dissolution (4) de la fraction claire (HF), les impuretés étrangères aux fibres, notamment des films en matière plastique, sont éliminées de celle-ci à l'aide d'un criblage par voie humide.

14. Procédé selon la revendication 13,
**caractérisé en ce que**
le criblage par voie humide est effectué à une consistance comprise entre 2 et 5 %.

15. Procédé selon la revendication 13 ou 14,
**caractérisé en ce que**
le criblage par voie humide est effectué à travers des cribles à ouvertures de criblage circulaires d'un diamètre de 1 à 3 mm.

16. Procédé selon la revendication 13, 14 ou 15
**caractérisé en ce que**
le criblage par voie humide fonctionne de telle sorte qu'au moins 80 % des films en matière plastique, qui sont encore contenus lors de la dissolution (4), soient éliminés.

17. Procédé selon l'une des revendications 10 à 16,
**caractérisé en ce que**,
entre la dissolution (4) et l'unité de dêsericrage (6, 13), il n'est pas utilisé d'hydrocyclones.

18. Procédé selon l'une des revendications précédentes,
**caractérisé en ce que**
un criblage par voie humide est effectué pour le tri fin dans au moins une trieuse sous pression (7, 7', 7"), des cribles à fentes d'une largeur de fente de 0,5 mm maximum étant utilisés.

19. Procédé selon la revendication 18,
**caractérisé en ce que**
une consistance de 0, 8 à 2 %, de préférence de 1 à 1,6 %, est réglée lors du tri fin.

20. Procédé selon l'une des revendications précédentes,
**caractérisé en ce que**
le procédé est mis en oeuvre en continu.

21. Procédé selon l'une des revendications précédentes,
**caractérisé en ce que**
le fractionnement par voie sèche (3) est effectué dans un aéro-séparateur, dans lequel la fraction claire (HF) est récupérée en tant que fraction légère.

22. Procédé selon la revendication 21,
**caractérisé en ce que**,
après le fractionnement par voie sèche (3), la fraction claire (HF) est amenée par voie pneumatique dans l'appareillage servant à la dissolution (4).

23. Procédé selon l'une des revendications précédentes,
**caractérisé en ce que**
le tri par voie sèche (2) est effectué dans un aéro-séparateur, dans lequel les vieux papiers (AP) sont récupérés en tant que fraction légère.

24. Procédé selon les revendications 21 et 23 ou selon les revendications 22 et 23,
**caractérisé en ce que**
les deux aéro-séparateurs sont disposés directement l'un derrière l'autre, la fraction légère du premier aéro-séparateur étant utilisée en tant que flux d'entrée pour le deuxième aéro-séparateur.

25. Procédé selon la revendication 23,
**caractérisé en ce que**
des procédés de séparation optique, et/ou balistique sont utilisés de façon supplémentaire pour le tri par voie sèche (2) .

26. Procédé selon l'une des revendications précédentes,
**caractérisé en ce que**,
pour l'élimination de petites particules lourdes, il n'est pas utilisé d'hydrocylones de haute performance avec une accélération centrifuge supérieure à 200 fois l'accélération terrestre.
